Europäisches Patentamt

(19) European Patent Office  (11) Publication number: **0 074 844**

Office européen des brevets  **A1**

(12) **EUROPEAN PATENT APPLICATION**

(21) Application number: **82304828.5**  (51) Int. Cl.³: **B 62 D 25/18**

(22) Date of filing: **13.09.82**

(30) Priority: **11.09.81 GB 8127531**
**30.01.82 GB 8202713**
**13.05.82 GB 8213996**

(43) Date of publication of application:
**23.03.83 Bulletin 83/12**

(84) Designated Contracting States:
**DE FR IT NL**

(71) Applicant: **Netlon Limited**
**Kelly Street Mill Hill**
**Blackburn Lancashire(GB)**

(71) Applicant: **Buckley, Allan**
**55 Enfield Avenue Milnrow**
**Rochdale Lancashire(GB)**

(72) Inventor: **Buckley, Allan**
**55 Enfield Avenue Millnrow**
**Rochdale Lancashire(GB)**

(74) Representative: **Lyndon-Stanford, Edward Willoughby**
**Brooke et al,**
**Marks & Clerk 57/60 Lincoln's Inn Fields**
**London WC2A 3LS(GB)**

(54) Vehicle spray inhibitor.

㊲ A panel (10) adapted for securement to a mudguard, wing or wheel arch of a motor vehicle comprises a plurality, e.g. three, superimposed inhibiting mesh layers (11, 12, 13) separated from one another by spacers, e.g. spacer mesh layers (14, 15, 16, 17), having larger interstices than said inhibiting layers. The panel (10), when attached adjacent each wheel of a vehicle, provides a reticulate matrix which tends to prevent water thrown up by the vehicle's wheels from rebounding back onto said wheels, thereby reducing the overall amount of spray produced and improving the driver's visibility. There is a gutter (24).

FIG.1.

EP 0 074 844 A1

**0074844**

ALLAN BUCKLEY

VEHICLE SPRAY INHIBITOR

SPECIFICATION

This invention concerns a vehicle spray inhibitor, that is to say a device constructed or adapted to be secured to or form part of the mudguard or wing, or wheel arch of a motor vehicle, so as to face towards the respective wheel and the function of which is to inhibit or eliminate spray which would otherwise be created when the vehicle is driven over wet surfaces, for example at a relatively high speed along a motorway.

Visual observations seem to suggest that for the most part, spray thrown out by vehicles, such as lorries, travelling at relatively fast speeds along wet roads, arises at each wheel, from water thrown up from the wheel at road level to rebound from the facing mudguard, wing or wheel arch surface and back onto the wheel where it is either broken up into very fine particles which disperse as widespread spray or is thrown back against and rebounds again from the facing surface then to be broken up.

An object of the present invention is to provide an arrangement which is operative to inhibit rebounding of water back onto the vehicle wheel and which acts to encourage the water thrown up by the wheel to run down the surface of the mudguard, wing or wheel arch or adjacent thereto and to flow therefrom with the minimum of spray production.

With this object in view the present invention provides a vehicle spray inhibitor which comprises a panel adapted for securement to a mudguard, wing or wheel arch of a motor vehicle, or to serve as or form part of a vehicle mudguard, and comprising a plurality of superimposed inhibiting mesh layers with adjacent said layers separated from one another by spacers so that the panel provides a reticulate matrix which tends to prevent water rebounding back onto the vehicle's wheel.

Preferably the arrangement comprises three said inhibiting mesh layers there being spacer layers therebetween. Each such spacer layer may, in itself, be in the form of a spacer mesh layer in which the interstices are considerably larger than those of the inhibiting mesh layers.

In a preferred embodiment, the inhibiting mesh layers are of progressively decreasing mesh size from that side of the panel which faces the vehicle wheel to the other, and the outermost layer of largest mesh is preferably shaped to provide folded-back margins along two opposite sides, which margins serve to retain the layers of the panel relative to one another.

To minimise the possibility of corrosion or deterioration of the inhibitor of the invention, each of the layers is preferably of a plastics material, such as polypropylene or nylon. However, the layers may be of hardened rubber, artificial rubber, aluminium, plastics-coated metal or any other suitable material so long as they are reasonably light in weight, pliable and substantially non-corrodible.

To facilitate cleaning of the inhibitor (e.g. in the case where it has been used over muddy roads and has become caked with adherent mud and/or other foreign matter) the inhibitor panel preferably has its layers secured together along at least one side by releaseable means (such as nuts and bolts) so that the layers may be separated (e.g. in the manner of the leaves of a book).

The invention will be described further, by way of example with reference to the accompanying drawings, in which:

Fig. 1 is an exploded perspective view of a portion of a preferred embodiment of the vehicle spray inhibitor of the invention;

Fig. 2 is a perspective view of the same portion of spray inhibitor when the layers are assembled together: and

Fig. 3 is a perspective view, to a smaller scale, of the preferred embodiment of the vehicle spray inhibitor of the invention mounted on a vehicle mudguard.

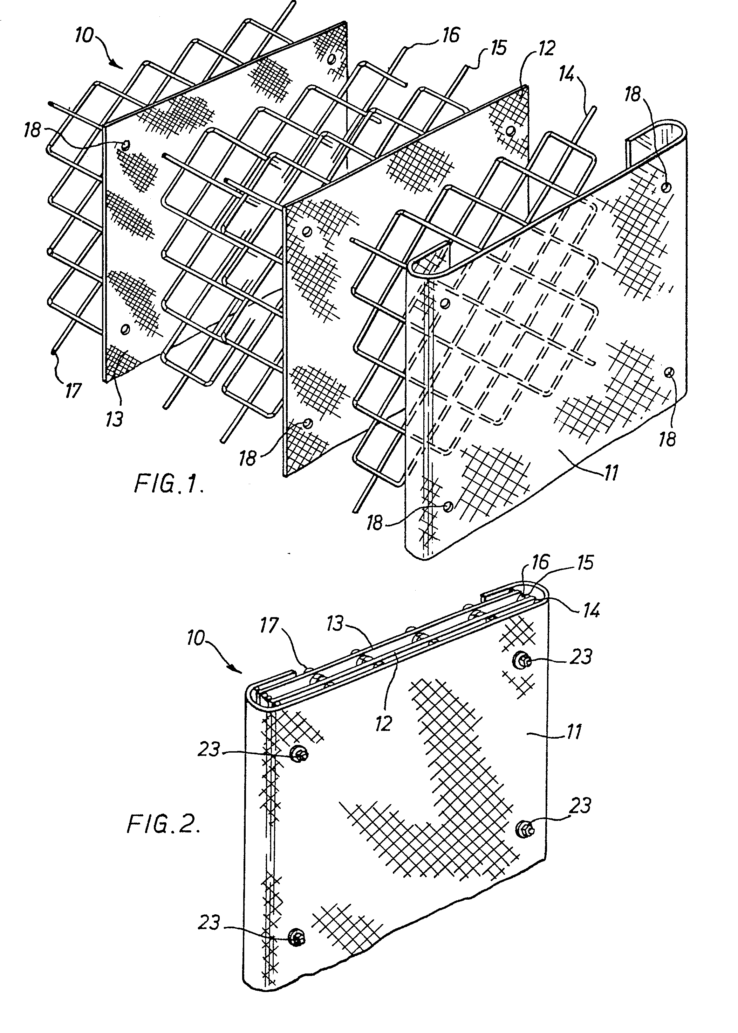

As shown in Figs. 1 and 2, the preferred embodiment of the vehicle spray inhibitor 10 of the invention is made substantially wholly of a suitable plastics material such as polypropylene or nylon and is in the form of a substantially rectangular panel comprising seven layers. These layers are, essentially, three spray inhibiting mesh layers 11, 12, 13 and four spacer layers 14, 15, 16, 17 which are arranged in the following sequence: a first spray inhibiting layer 11 which is of moulded plastics material with relatively large mesh size, for instance in the range of 10 mm to 15 mm; a first spacer layer 14 which is of very large mesh size with interstices, for example, in the range of 40 mm to 100 mm; a second spray inhibiting layer 12 which is similar to the first layer 11 but with intermediate mesh size, for instance in the range of 5 to 10 mm; second and third spacer layers 15, 16 which are similar to the first spacer layer 14; a third spray inhibiting layer 13 having a relatively smaller mesh size than the other two inhibiting mesh layers 11, 12, for instance in the range of 2 to 5 mm; and a fourth spacer layer 17, similar to the first, second and third spacer layers 14, 15, 16 and overlying the third spray inhibiting layer 13.

These layers are all rectangular and substantially of equal dimensions, being, for instance approximately 30 to 35 cms in width and 60 to 70 cms in height, with the exception of the first inhibiting mesh layer 11 which is of greater width than the rest, being, for instance about 15 cms wider than the other layers.

In making the inhibitor 10, and before it is installed on a motor vehicle, the layers are assembled together, in face-to-face abutting disposition, in the sequence above described, and the overlapping side margins of the first inhibiting mesh layer 11 are folded over to overlie the corresponding margins of the outer layers. The entire inhibitor 10 may be reatined in this condition by heat sealing, e.g. spot welding, by removable stitching, or by strapping, such as plastics (e.g. nylon) strapping taken widthwise around the assembly, none of which are shown in the drawings.

A number of holes 18 are formed at each side of the inhibiting mesh layers 11, 12, 13 to facilitate subsequent securement of the inhibitor 10 to a vehicle mudguard. The layers of the inhibitor may therefore also be secured together by nut and bolts 23 through said holes 18 as shown in Fig. 2.

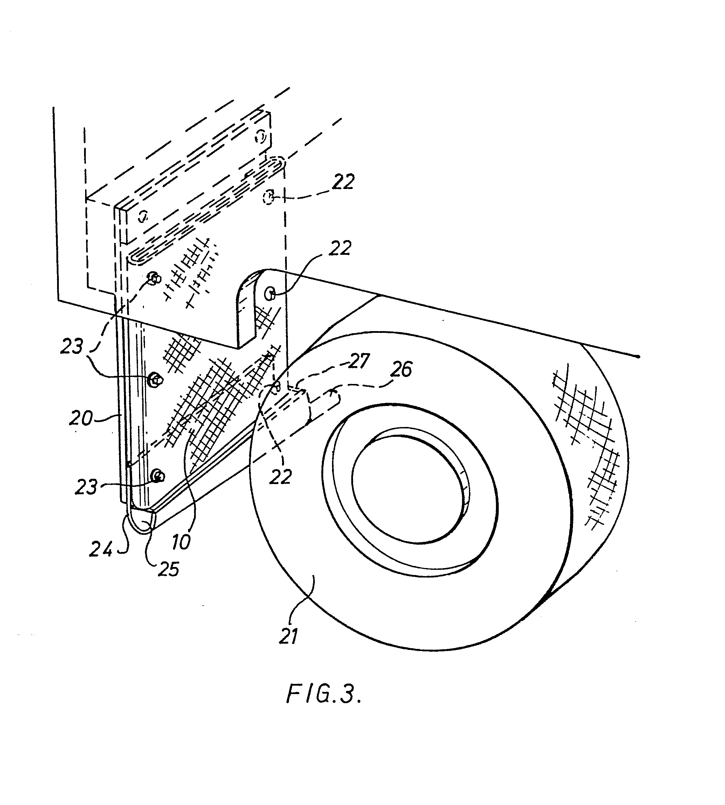

For use, as shown in Fig. 3, one such inhibitor 10 is installed on each mudguard 20 of a motor vehicle, such as a lorry, with the fourth spacer mesh layer 17 closest to the mudguard surface and with the first inhibitor mesh layer 11 facing the outer surface of a respective wheel 21. The inhibitor 10 is positioned so that its lower edge is approximately level with the lower edge of the mudguard 20 (or any mudflap fixed thereto (not shown)) and to extend upwards to at least level with the top of the wheel 21. Securement is preferably effected using non-corrosive (e.g. copper) rivets 22 through the side margin nearest the vehicle's chassis and using releasable nuts and bolts 23 through the side margin away from the chassis. The stitching or strapping can be removed after installation.

Similar spray inhibitors 10 may alternatively or additionally be fitted to the wing or wheel arch of the vehicle. They may be used on motor car, coaches and small trucks as well as heavy lorries.

When a vehicle so fitted is driven over wet roads, the amount of spray thrown up by its wheels is significantly less than that produced on an equivalent vehicle not so fitted. As an example, it has been found that in weather conditions where the rear-viewing visibility of the non-fitted vehicle's driver was completely obscured by spray, the driver of the comparable vehicle fitted with the inhibitors enjoys good rear-viewing visibility. The device of the invention accordingly is significantly instrumental in eliminating or reducing the danger hitherto associated with driving on wet roads.

With the arrangement as described, in the event of the inhibitor 10 becoming clogged with mud or other foreign matter, this can be removed efficiently without completely removing the device from the vehicle. Normally, it can be washed off with a high-powered water jet, but in the event that this should be insufficient, the bolts and nuts 23 can be removed from the side away from the chassis, and the various layers may be separated from one another, like the pages of a book, for cleaning. Of course, if the layers were originally stitched or spot-welded together, the stitching at that side must be removed or the spot welds at that side cut through to release the layers as aforesaid for cleaning.

Naturally, the invention is not confined to the precise details of the foregoing example, and variations may be made thereto. Thus, the number of layers and the manner in which they are secured in place and separated from one another may differ from what has been described. In its simplest case, the panel will comprise two spray inhibiting mesh layers and these may be of the same or differing mesh sizes. The spacers do not have to be mesh layers themselves, but may be in the form of spacer discs, washers or other suitable plastics elements which hold the inhibiting layers apart so that the whole is a reticulate matrix which will minimise splash-back of water thrown towards the mudguard, wing or steel arch by the wheel. The panel itself can, of course, be installed with appropriate spacers so as to be spaced away from the confronting mudguard wing or wheel arch surface.

If desired, all of the layers may be of the same external dimensions, or some of the layers may be of different shapes and/or dimensions than the others.

Instead of being fitted to a conventional mudguard, a spray inhibitor according to the invention may be attached to a backing sheet, e.g. of rubber or plastics material, to form a mudguard suitable for fitting onto a vehicle.

Other variations are, of course, possible.

Figure 3 shows that a J-section channel or gutter 24 can be bolted below the inhibitor 10 using the rivets 22 and nuts and bolts 23. The outer end of the gutter 24 is closed by a plate 25 and the gutter slopes inwards towards a pipe or down spout 26, the inner end of the gutter channel being about 5 cms lower than the outer end. The upper part of the inner end can be closed by a plate 27. The gutter 24 can be made of metal or plastics.

More generally, the channel can be associated with any device or structure such as a vehicle mudguard, wing fender or mudflap, or any arrangement provided adjacent or around one or more wheels of a vehicle to minimise water and other matter from the road being thrown up behind the vehicle.

In use, one of the aforesaid mudguard or mudflap arrangement may be attached behind all the wheels of a two-axled or multi-axled vehicle in place of the conventional mudguards or flaps, said arrangement being orientated such that the channel section is located along the lower edge of the mudguard or flap with the channel on the side of the mudguard or flap facing the wheel and the spout extending inwardly of the vehicle.

Whenever the vehicle is travelling along a wet road, the water and matter entrained thereby thrown up by the wheels strikes the mudguards or flaps, some rebounds onto the wheels and is broken up to form spray but some drains downwards into the inclined channel and is directed downwardly from the spout, at the lower end of the channel, inwardly of the vehicle. Thus, in the case of each wheel, except those on the rearmost axle, water is directed away from the path of the following wheel so that the latter runs on a track which has at least to some extent been cleared of water. When the relevant wheels are those on closely adjacent axles such as those of tandem axle or triple axle trailers, or on domestic motor cars or small vans, the extent to which the track of the rearward wheel or wheels is cleared of water is considerable.

The fact that the wheels of an axle pair following an axle pair with the mudguard or mudflap arrangement of the invention fitted run on a drier track than with previous mudguard arrangements leads to better road grip and safer braking of these following wheels and considerably reduces the danger of jack-knifing in articulated vehicles. Moreover, since the water is directed out of the spout at a short distance above the road surface, splashing, which is detrimental to other road users, is also reduced.

Attachment of the mudguard or mudflap arrangement of the invention behind the last axle pair of wheels on a vehicle

0074844

considerably reduces the amount of spray thrown up behind the vehicle so that the rear of the vehicle is less susceptible to corrosion and remains cleaner for a longer period of time than previously. The latter feature may be considered advantageous in the case of coaches and vans which have advertising material on the rear of the vehicle. Despite this advantage, owners of vehicles, particularly of large vehicles, may decide against installing a mudguard or flap arrangement on the rearmost wheels because of the risk of such arrangements being trapped or damaged when the vehicle is reversed towards or onto a kerb or other raised platform.

In a further embodiment of the invention, the mudguard or flap arrangement may include a channel on both sides of the mudguard or flap. Such an arrangement is advantageously used between closely adjacent wheels, for example on tandem axle or triple axle trailers. A rearwardly facing channel catches and laterally directs water thrown forward from the rear wheel while a frontwardly facing channel deals with water thrown up by the front wheel in the manner previously described.

The above-described advantages of the mudguard or mudflap arrangement of the invention may be significantly enhanced by attachment of a spray inhibitor.

The scope of the invention is of course not limited to the foregoing details and numerous variations are possible. For example, there need not be a pipe and spout extending from one end of the channel, the other end need not be closed by an end wall and the planar portion of the channel section may simply be substantially rectangular instead of trapezoidal in shape. In fact, the channel or channels of the mudguard or mudflap arrangement of the invention may be provided by one or more channel sections capable of being fitted to any type of mudguard or other spray-inhibiting device or by one or more channels formed integrally with a mudguard or flap, which may itself be longer at the side intended for location inwardly of the vehicle than the side to be located outwardly.

CLAIMS

1. A vehicle spray inhibitor comprising a panel 10 adapted for securement to a mudguard 20, wing or wheel arch of a motor vehicle, or to serve as or form part of a vehicle mudguard 20, <u>characterised in that</u> it comprises a plurality of superimposed inhibiting mesh layers 11,12,13 with adjacent said layers 11,12,13 separated from one another by spacers 14,15,16 so that the panel 10 provides a reticulate matrix which tends to prevent water rebounding back onto the vehicle's wheel 21.

2. The vehicle spray inhibitor of Claim 1, and comprising three inhibiting mesh layers 11,12,13 with spacer layers 14,15,16 therebetween.

3. The vehicle spray inhibitor of Claim 1 or 2, wherein each spacer layer 14,15,16 is, in itself, in the form of a spacer mesh layer 14,15,16 in which the interstices are considerably larger than those of the inhibiting mesh layers 11,12,13.

4. The vehicle spray inhibitor of any preceding Claim, wherein the inhibiting mesh layers 11,12,13 are of progressively decreasing mesh size from that side of the panel 10 which faces the vehicle panel 21 to the other.

5.    The vehicle spray inhibitor of any preceding Claim, wherein the outermost layer of mesh 11 is shaped to provide folded-back margins along two opposite sides, which margins serve to retain the layers 11-16 of the panel 10 relative to one another.

6.    The vehicle spray inhibitor of any preceding Claim, wherein each of the layers 11-16 is formed of a plastics material.

7.    The vehicle spray inhibitor of any preceding Claim, wherein the layers 11-16 are secured together along at least one side by releasable means 23 so that the layers 11-16 may be separated to facilitate cleaning.

8.    The vehicle spray inhibitor of any preceding Claim, and including a channel 24 extending along the lower edge of said panel 10 and capable of receiving water running down from said panel 10 and directing said water laterally of said panel 10.

9.    A vehicle spray inhibitor associated with an arrangement for mounting adjacent or around a vehicle wheel, which includes a channel extending along the lower edge of the arrangement and capable of receiving water running down at least one surface of the arrangement and directing said water laterally of the arrangement.

FIG.1.

FIG.2.

FIG.3.

**0074844**

Application number

European Patent Office

**EUROPEAN SEARCH REPORT**

EP 82 30 4828.5

## DOCUMENTS CONSIDERED TO BE RELEVANT

| Category | Citation of document with indication, where appropriate, of relevant passages | Relevant to claim |
|---|---|---|
| A | DE – U – 1 944 206 (SATTELBERGER)  * claims 1, 2; fig. 1, 2 * | 1,9 |
| A | DE – U – 6 606 116 (SAMER)  * claims 1, 3; page 2, lines 10 to 16; fig. 1 to 4 * | 1 |
| P,A | GB – A – 2 078 181 (BOYDELL & JACKS)  * fig. 1 to 12 * | 1,5 |
| A | DE – U – 1 936 841 (LAURITSEN)  * entire document * | 1,6 |
| A | GB – A – 2 014 525 (BEGG, COUSLAND & CO.)  * fig. 2, 5 * | 8,9 |
| A | CH – A – 471 714 (JAQUIER) | |

**CLASSIFICATION OF THE APPLICATION (Int. Cl. 3)**

B 62 D 25/18

**TECHNICAL FIELDS SEARCHED (Int.Cl. 3)**

B 62 D 25/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 12-11-1982 | LUDWIG |

EPO Form 1503.1  06.78